# EUROPEAN PATENT SPECIFICATION

(11) **EP 1 410 727 B1**
(45) Date of publication and mention of the grant of the patent: **11.07.2007**
(21) Application number: 03019611.7
(22) Date of filing: 04.09.2003
(51) Int. Cl.: A43B 5/02, A43C 15/16

(54) **Sole and method for the manufacture of a sole**
Sohle und Herstellungsverfahren
Semelle et procede de fabrication

(30) Priority: 17.10.2002 DE 10248482
(43) Date of publication of application: 21.04.2004
(73) Proprietor: adidas International Marketing B.V., 1062 KR Amsterdam (NL)
(72) Inventor: Braint, Antoine, 31011 Asolo Treviso (IT); Saur, Erwin Friedrich, 91126 Schwabach-Wolkersdorf (DE)
(74) Representative: Hess, Peter K. G.

(56) References cited:
- EP-A- 1 068 813
- EP-A- 1 250 860
- US-A- 5 848 482
- US-A- 6 108 944

## Description

### 1. Technical field

The present invention relates to a sole, in particular for a soccer shoe, and a method for manufacturing a sole.

### 2. The prior art

For improving the grip of shoes which are used on soft ground such as a field, it is known to provide the sole with studs penetrating the ground. Well-known examples for shoes comprising such soles are golf shoes or soccer shoes.

When the shoes are to be used under different ground conditions, it is advantageous if the studs are releasably attached to the sole in order to allow an adaptation. For example studs for soccer shoes, which are screwed to the sole, have been known for many years. Apart from an adaptation to the particular ground conditions the releasable attachment also allows the replacement of worn studs without having to obtain a new shoe.

However, if the studs must be very quickly replaced during a soccer game (or a golf tournament) to adapt to changing weather conditions and correspondingly changing ground conditions, screw studs are disadvantageous due to their time-consuming attachment. The same applies to systems wherein the stud is anchored to the sole by means of additional pins, expanding elements or screw elements.

Therefore, devices for mounting a stud have been suggested in the prior art wherein the stud can be "clipped" into a corresponding receptacle of the stud simply by inserting the stud without having to perform any additional assembly step.

Such constructions are for example disclosed in the US 5,638,615 and the US 4,035,934.

To this end, a metal socket with a circular snap ring is provided in the receiving unit of the sole of the US 5,638,615. The snap ring is made from spring steel and arranged together with the socket in the receiving unit for the stud during the manufacture of the sole. When the mounting pin of the stud to be attached is inserted, the snap ring is expanded before its snaps into an annular groove of the mounting pin and thereby fastens the stud. The rotationally symmetric form of the receiving unit and the stud allows a rotation of the mounted stud inside the receiving unit.

In a similar way two metal spring pins are arranged in the receiving unit of the US 4,035,934, which are deflected during insertion of a base member of the stud and which engage a corresponding groove of the base member at the end of the inserting movement. The complete receiving unit with the spring pins and the further components is at first pre-assembled on a plate during the manufacture of the sole according to the US 4,035,934 and subsequently fixed in a corresponding bore of the sole.

The most important disadvantage of the described constructions according to the US 5,638,615 and the US 4,035,934 is the great expenditure for their manufacturing and the resulting costs. As mentioned, at first a complex pre-assembly of the receiving unit is necessary which is subsequently connected in a further manufacturing step to the actual sole. The large number of small parts used renders an automation difficult so that a substantial amount of manual work is required. Further, the metal parts of the receiving units are susceptible for rust and there is always the risk of losing a spring or a snap ring, when the studs are replaced.

A different approach is known from the US 5,848,482. Here, the receiving unit and/or the mounting pin of the studs are made from a deformable elastomeric material. During insertion the material is compressed and expands only in the mounting position of the stud, which is thereby fastened to the sole. This is an easy way to obtain a releasable attachment of the stud . However, the forces for mounting and releasing the stud are considerable due to the necessary compression of the material of the stud and/or the receiving unit. As a consequence, it is difficult to quickly replace a large number of studs of a shoe.

The EP 1 068 813 A1 discloses a slipping prevention device for footwear having a fitting portion to be received by a holder. The holder comprises tongue pieces engaging a groove in the projection to maintain the slipping prevention device in the holder.

It is therefore the problem of the present invention to provide a sole for the releasable attachment of a stud allowing a simple and cost-efficient manufacture which simultaneously provides an easy attachment of the stud. Further, a cost-efficient manufacturing method for a sole is to be provided.

### 3. Summary of the invention

The present invention relates to a sole, in particular of a soccer shoe, comprising a sole body from a first material, at least one receptacle from a second material, at least one stud, which can be releasably mounted in the receptacle by insertion, with a fastening projection having at least one first locking means, a wall being made in one piece with the receptacle and having a second locking means, and a cavity arranged inside the receptacle, so that the wall is deflected into the cavity when the fastening projection is inserted, until the first and second locking means engage each other.

The arrangement of the wall being integral with the receptacle, i.e. in one piece, provides together with the cavity of the receptacle a kind of "spring element" according to the invention, which is preferably elastically deflected during insertion of the fastening projection of the stud, and which allows a locking engagement of the two locking means.

The use of different materials for the sole and the receptacle allows that the second material of the receptacle comprises preferably a greater stiffness than the first material of the sole body. This allows on the one hand to provide a sufficiently elastic sole, for example for an easy rolling-off, depending on the respective field of use or a torsional movement of the forefoot part with respect to the rearfoot part. The receptacle, on the contrary, can be made from a highly rigid material, for example a suitable plastic material or even a metal to permanently resist the substantial mechanical loads of the stud. Preferably, the sole can be manufactured by injection molding the first material around the pre-manufactured receptacle made from the second material.

Thus, the manufacture of the sole is preferably a two-step procedure: At first, the receptacle comprising the wall and the cavity is manufactured, for example by injection molding a fiber reinforced, highly stable plastic part. Subsequently, one or more receptacles are arranged at desired positions in a mold for injection molding the sole body, which is molded around the pre-manufactured receptacles in the second manufacturing step. The first material for the sole body can therefore be substantially independently selected from the second material for the receptacle, for example in order to improve the wearing comfort or other properties of the shoe to be built.

According to a preferred embodiment, the first locking means is provided as a recess in the fastening projection of the stud and the second locking means is provided as a corresponding projection of the wall which engages the recess during locking. According to a further embodiment, the first locking means is provided as a projection and the second locking means as a corresponding recess, which is engaged by the projection during locking. In both embodiments the wall is deflected into the cavity during insertion of the fastening projection until the projection and the corresponding recess are in the same position and engage each other.

The cavity is preferably provided as a recess open to the topside of the receptacle. This facilitates the removal of the receptacle from the mould in a case, where the receptacle is made by injection molding a plastic material. By means of an additional seal the cavity can be closed on the topside in order to avoid the penetration of material which could negatively affect the deflection of the wall.

The fastening projection of the stud is preferably oblong and the wall is preferably substantially parallel to the longitudinal axis of the fastening projection. Thus, the stud is secured against rotation inside the receptacle without high constructional effort. This is important, if the studs, for example for soccer shoes, have a distinct asymmetric shape in order to meet specific functional requirements.

In an alternative embodiment a semi-circular cavity and a corresponding wall are arranged at least at one end of the receptacle.

In a particularly preferred embodiment of the invention a first and a second cavity are arranged on opposite sides of the receptacle and two walls extend substantially parallel to a longitudinal axis of the fastening projection. Further, two first locking means are preferably arranged on the two longitudinal sides of the fastening projection and two second locking means are arranged on the corresponding walls. As a result, the stud is reliably fastened to the receptacle on its two longitudinal sides assuring a stable seat at the sole.

Preferably, the stud comprises an engaging means below the fastening projection, which is preferably formed as two recesses arranged on opposite sides of the stud. By means of a suitable tool, the necessary vertical force can be applied to pull the stud out of the receptacle.

The receptacle and the corresponding fastening projection have preferably a corresponding shape which unambiguously defines the orientation of the mounted stud. This assures a correct arrangement of the stud at the sole, even if the mounting is done in a great hurry, for example during a game or a tournament.

In a further preferred embodiment the part of the receptacle directed to the stud is reinforced by an additional insert, wherein the insert is preferably shaped like a collar and surrounds the fastening projection of the mounted stud.

In addition, it is preferred that the receptacle and/or the insert are reinforced by a metal element, wherein the metal element is preferably provided as a ring surrounding the fastening projection of the mounted stud.

According to a further aspect, the present invention relates to a shoe with a sole as described above.

Finally, the present invention relates to a method for manufacturing a sole, in particular of a soccer shoe, comprising the steps of providing at least one receptacle for a stud with a fastening projection having at least a first locking means, wherein the receptacle comprises a cavity and at least one wall with at least a second locking means, the wall being made in one piece with the receptacle, and the step of forming a sole body around the at least one receptacle. Preferably, the receptacle and /or the sole body are manufactured by injection molding.

As a result, a very simple and cost-efficient manufacturing method is provided since the overall procedure requires only two steps:

At first the receptacle is preferably injection molded. After a quality control, if necessary, the sole body is then injected around one or more pre-manufactured receptacles to create the complete sole. Using modem manufacturing techniques it is easy to completely automate this process.

The receptacle and the sole body are preferably made from two different materials having preferably different material properties. This allows to optimize the materials for their respective purpose. For example the material for the receptacle of the stud comprises preferably a greater stiffness than the second, preferably more elastic material for the sole body.

Further advantageous developments of the sole according to the invention and the method according to the invention are the subject matter of further dependent claims.

### 4. Short description of the drawings

In the following detailed description, presently preferred embodiments of the invention are described with reference to the drawings which show:
- Fig. 1:: A perspective view of a front part of a preferred embodiment of the sole according to the invention;
- Fig. 2:: a detailed top view of the first preferred embodiment of the sole;
- Fig. 3:: a cross-section along the line III-III in the preferred embodiment of Fig. 2;
- Fig. 4:: an explosionary view of components of a further preferred embodiment;
- Fig. 5a:: a top view of the additional insert 30 of Fig. 4;
- Fig. 5b:: a cross-section along the line II-II in Fig. 5a;
- Fig. 5c:: a cross-section along the line III-III in Fig. 5a;
- Figs. 6a, 6b:: a top view and a side view of a ring arranged in the insert 30;
- Fig. 7:: a cross-section corresponding to Fig. 3 in the embodiment of the Figs. 4-6b;
- Fig. 8:: a further embodiment comprising semi-circular walls;
- Fig. 9:: an explosionary view of a further preferred embodiment; and
- Fig. 10:: a cross-section of the embodiment of Fig. 9.

### 5. Detailed description of preferred embodiments

In the following presently preferred embodiments of the sole according to the invention are described with reference to a sole of a soccer shoe. However, it is to be understood that the present invention can be used in all cases wherein studs are releasably attached to a shoe sole.

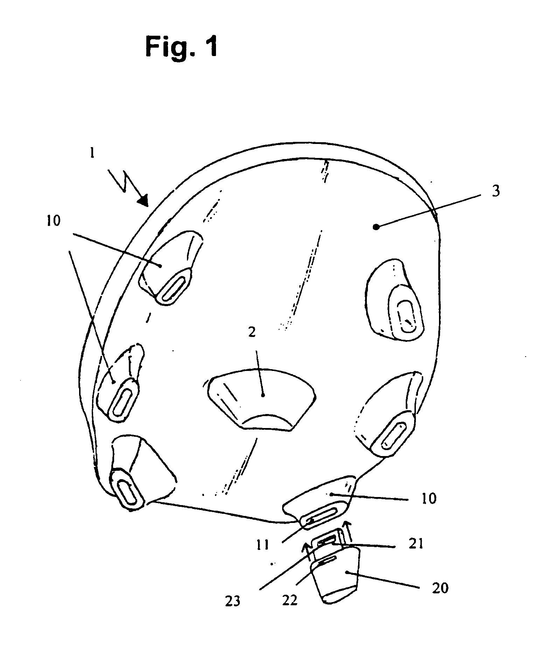

Fig. 1 shows a view of the front part of a preferred embodiment of the sole 1 according to the invention comprising a plurality of base members 10 for releasably attached studs 20. The arrangement of the base members 10 along the edge of the sole is only one example for possible configurations, as it is preferably used for soccer shoes. Additionally, base members 10 are in this case also arranged in the heel part (not shown). In addition to the base members 10 for releasable studs, also one or more studs 2 can be provided, which are permanently anchored to the sole.

As schematically indicated by arrows for the base member 10 on the right rear end, the stud 20 is releasably mounted to the sole 1 by a simple insertion of its fastening projection 21 into a receptacle 11 of the corresponding base member 10. Neither screwing, nor any additional rotation, nor any other actions are necessary for the attachment after the insertion.

If the stud 20 is to be removed from the base member 10, the reverse movement takes place, i.e. the stud 20 is essentially vertically pulled out of the receptacle 11. To this end, slit-like recesses 22 are preferably provided on the sides of the stud 20, which can be engaged by a suitable claw-like tool (not shown) to securely catch the stud 20. Instead of the shown slit-like recesses 22, also other devices can be provided for the engagement with the tool, for example circular recesses or all kinds of suitable lateral protrusions.

As a result, the described way of mounting allows an extremely fast replacement of all studs 20 of the shoe sole 1, so that the gripping properties of the shoe can be quickly adapted to changing ground conditions, even during a game.

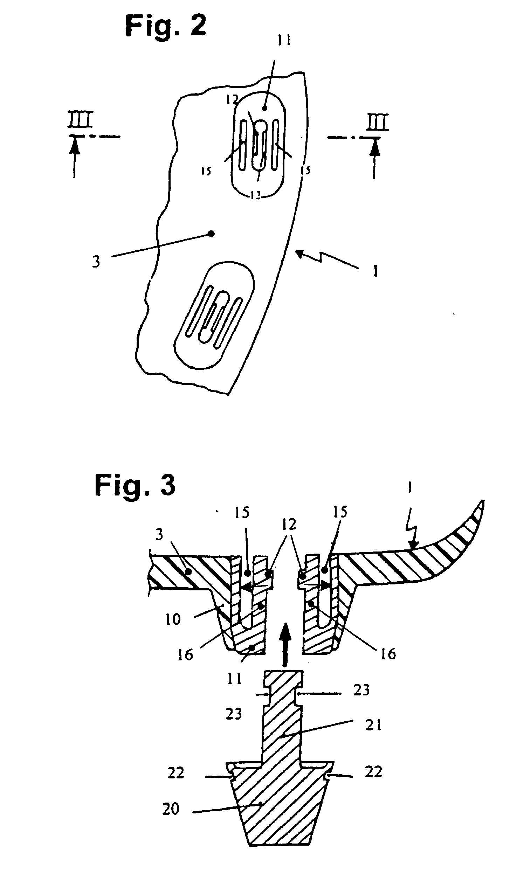

Fig. 2 shows a detailed view of the sole 1 of Fig. 1 from above. As can be seen, the sole 1 comprises a sole body 3 from a first material and receptacles 11 arranged therein from a second material. The already mentioned base member 10 can either be part of the receptacle 11 or of the sole body 3. Mixed constructions are also conceivable.

Two inwardly directed projections 12 are provided in an opening of the receptacle 11, which engage corresponding recesses 23 of the fastening projection 21 of the stud, when it is completely inserted into the receptacle 11. The inverted arrangement is also possible, i.e. the provision of lateral projections on the fastening projection 21 of the stud engaging corresponding recesses of the receptacle 11.

Fig. 3 shows an enlarged cross-sectional presentation of this embodiment. As can be seen, two cavities 15 are arranged inside the receptacle 11. The top view in Fig. 2 and the cross-section in Fig. 3 disclose that the cavities 15 are essentially shaped as oblong recesses in the receptacle 11, which are open to the top side. This facilitates the removal of the receptacle 11 from a mould, in a case where the complete receptacle 11 is made from a single piece of plastic by injection molding.

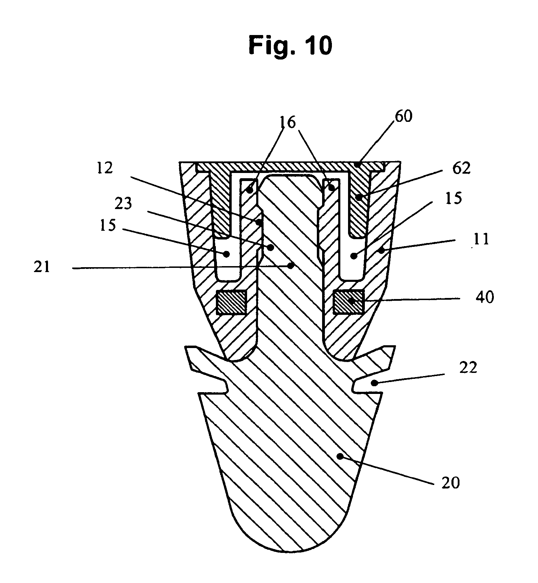

When, as indicated in Fig. 3 by the black vertical arrow, the fastening projection 21 is inserted into the receptacle 11, its upper end pushes the projections 12 apart (cf. the horizontal arrows in Figure 3). This is possible, since the walls 16 of the receptacle 11 have a certain elasticity and can therefore be deflected like a spring into the cavities 15 of the receptacle 11. The material used for the receptacle 11 together with the thickness and the length of the elastic wall 16 determine the resistance, when the fastening projection 21 is inserted, until the locking takes place. Depending on the used materials it may be advantageous to provide the projections 12 or the upper end of the fastening projection 21 with laterally inclined edges (see also the embodiment in Fig. 10 below in this respect) in order to facilitate the insertion. The projections 12 are preferably arranged in the upper part of the walls 16 so that the lower part of the receptacle 11 is sufficient to provide a secure housing for the fastening projection 21.

When the fastening projection 21 of the stud 20 has been inserted into the receptacle 11 until it stops, the projections 12 engage the recesses 23 due to the elastic spring-back of the walls 16 of the receptacle 11 and thereby fasten the stud 20 to the sole. In contrast to the prior art no additional metal small parts are necessary for locking. It is the receptacle 11 itself comprising the two cavities 15 and the intermediate walls 16, i.e. elastic spring elements, which reliably anchors the fastening projection.

This leads to an important advantage: Only two injection molding processes are necessary for the manufacture, one for the receptacle 11 and a second for the sole body 3 around the pre-manufactured receptacle 11. Preferably, materials are used, which lead to a strong bonding of the receptacle 11 in the surrounding sole body 3 (for example by melting or a chemical reaction such as a polymerization etc.). Preferably, the receptacle is made from a particularly rigid and stiff material, for example a fiber reinforced polyamide, whereas common polyamide is used for the sole body 3.

The section of Fig. 3 shows as well as Fig. 1 that the base member 10 itself extends downwardly from the sole in a similar manner to the stud. Thereby, the base member 10 has on the one hand a certain grip-improving function. On the other hand, a space is provided in the sole body 3 necessary for the arrangement of the receptacle 11 according to the invention. Further, the enlarged base member 10 prevents an excessive localized strain of the sole body 3, so that a breaking-off of single studs is avoided even under peak loads. Alternatively, however, the receptacle may also be integrated into the sole body 3 without a base member 10 so that the lower opening of the receptacle 11 is planar with respect to the lower side of the sole body 3 (not shown).

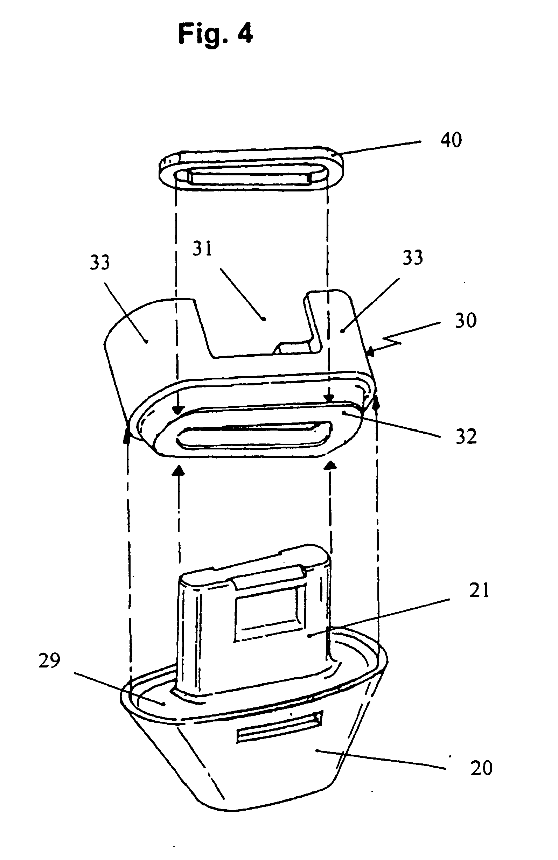

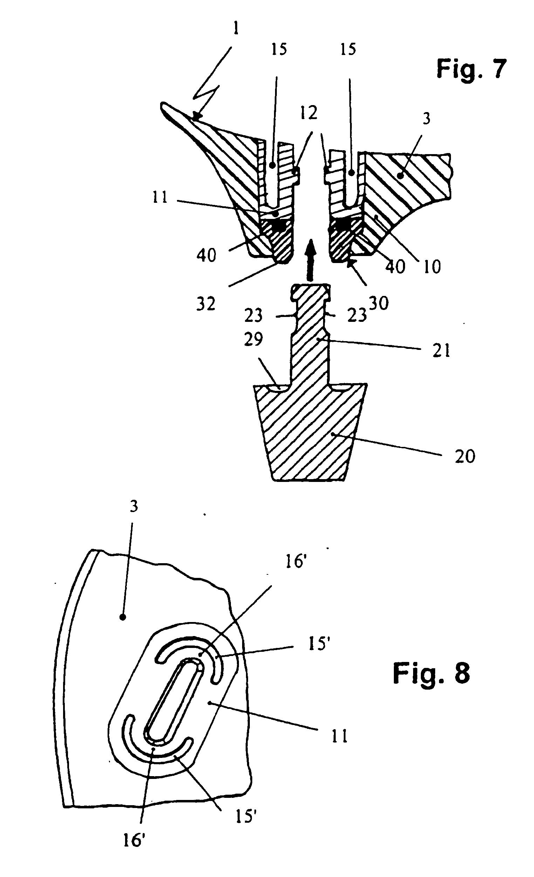

The Figs. 4 to 7 illustrate a further embodiment of the present invention including an additional insert 30 for reinforcing the lower part of the receptacle 11. As shown in the explosionary view of Fig. 4 and the cross-section in Fig. 7, the additional insert 30 is shaped like a collar and arranged around the fastening projection 21 of the stud 20 stabilizing its seat at the receptacle 11.

The insert 30 may be connected by gluing, co-injection or other known methods to the receptacle 11 and consists preferably of an even more reinforced material, for example a further polyamide having a greater fiber content.

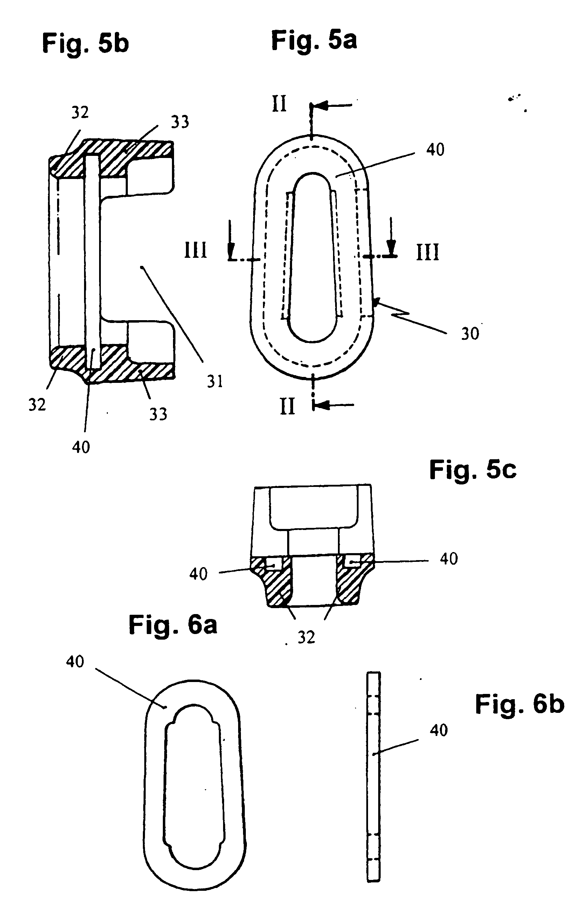

The preferred shape of the insert 30 is presented in the top view and the side view of Figs. 5a to 5c. Contact areas 33 are provided at the front and rear end of the oblong insert 30 and assure a reliable bonding to the receptacle 11. Alternatively or additionally, the additional insert may also be attached to the sole body 3. Cut-outs 31 are arranged along the longitudinal sides of the insert 30 allowing an unhindered interaction of the locking means 12, 23 of the fastening projection 21 of the stud and the elastic wall 16 of the receptacle 11. As a result, the preferred insert 30 does not directly participate in the locking of the stud 20. However, it reinforces the lowermost part of the receptacle 11. A circumferential projection 32 of the insert 30 fits into a corresponding recess 29 of the stud 20 and further increases the stability of the seat at the receptacle 11.

If the stud is subjected to particularly high mechanical loads, such as a stud at the heel of a soccer shoe, it is advantageous, if the insert 30 is further reinforced by a metal ring 40. This is schematically shown in the explosionary view of Fig. 4 and further indicated by the dashed lines in Fig. 5a. The ring 40 can be made from any material, for example steel. Since the ring 40 is at least partly surrounded by the preferably used plastic material of the insert 30, it is not susceptible to rust.

The term "ring" does not require a circular structure. Instead, any shape that helps to reduce the deformation of the insert 30 and thereby of the receptacle 11 is suitable. Further, although the embedded ring 40, as shown in Figs. 4 to 7 is planar, a three-dimensional shape is also conceivable.

In the preferred embodiment, the fastening projection 21 of the stud and the corresponding receptacle 11 have an oblong shape and the cavities 15 extend substantially parallel to the longitudinal axis of the fastening projection 21. Thus, the seat of the stud 20, which has also an oblong shape, is secured against rotation. However, it is also conceivable to provide alternative or additional cavities 15' corresponding walls 16' which are semi-circularly shaped and arranged at the front and/or rear end of the oblong receptacle 11. Such an embodiment is shown in Fig. 8.

Further, the opening of the receptacle 11 may have a distinct asymmetric shape corresponding to a similar shape of the fastening projection 21 so that the stud 20 can only be inserted with the specific orientation required at this part of the sole. If different studs are to be used in different parts of the sole, it is further possible to provide individually shaped receptacles and fastening projections 21 so that each stud 20 fits only into the corresponding receptacle 11.

However, a further modification of the design according to the invention is also conceivable, wherein one or more cavities 15 with corresponding walls 16 having projections or recesses are arranged around a rotationally symmetric receptacle 11, so that a rotation of the fastening projection 21 is possible inside the receptacle 11. In this case, the receptacle 11 could be surrounded by a plurality of cavities 15, for example three, with corresponding walls 16.

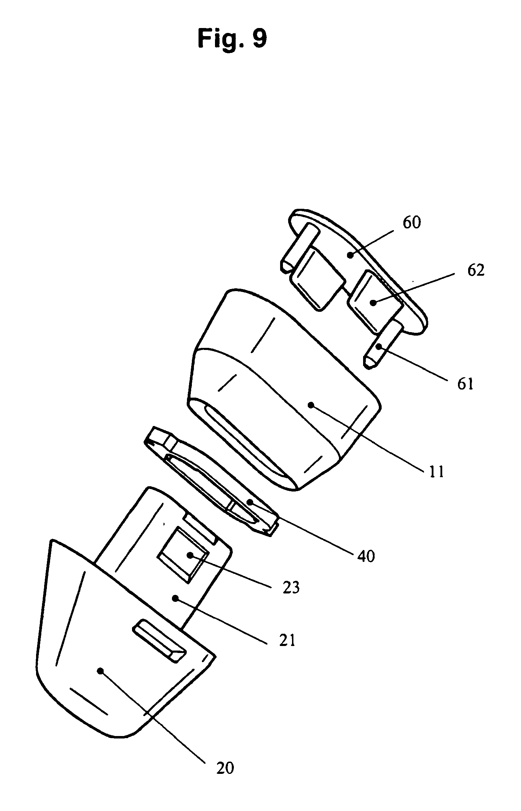

The Figs. 9, 10, finally, show a further, particularly preferred embodiment of the invention, wherein the cavities 15 of the receptacle 11 are closed from above by means of a separate seal 60. This seal 60 comprises pins 61 which are inserted into correspondingly shaped recesses of the receptacle 11 (not shown) to attach the seal 60 to the receptacle 11. Further, side areas 62 are provided which extend into the cavities 15 from above, however, without impairing the deflection of the walls 16 (cf. Fig. 10). Although not shown in the explosionary view of Fig. 9 and the cross-section of Fig. 10, the pins 61 as well as the side areas 62 may comprise small locking elements engaging corresponding recesses etc. in the receptacle 11 to avoid that the seal 60 becomes unintendedly detached.

One purpose of the seal 60 is to avoid the unintended penetration of material into the cavities 15, for example material used for the manufacture of the sole body 3 by injection molding etc. or a connecting glue, when the sole body 3 is formed around the pre-manufactured receptacle 11, which could hinder the deflection of the walls 16 into the cavity 15. In a similar manner the seal protects when an additional insole is glued to the finished sole 1. However, the cavities 15 may alternatively also be closed in a later step by an additional foil (not shown) which extends over a part or the complete area of the sole 1.

Furthermore, it can be seen that the optional ring 40 is in this presently particularly preferred embodiment directly arranged inside the receptacle 11 without using an insert 30 (cf. in particular the cross-section in Fig. 10). To this end, the receptacle 11 is preferably injection molded around the ring 40. Compared to a separate insert 30 the manufacture of the sole is further simplified without reducing the stability of the anchoring of the stud.

The studs 20 and the sole 1 can be manufactured from suitable plastic materials like polyamides. Alternatively, aluminum or other metals, which combine a low weight with high wear resistance can be used for the studs 20. In the case of metal studs, it is advantageous, if the fastening projection 21 is coated with a plastic layer which can slightly deform during insertion into the receptacle 11.

## Claims

1. Sole (1), in particular of a soccer shoe, comprising a sole body (3) of a first material, at least one receptacle (11) of a second material and at least one stud (20) which can be releasably mounted in the receptacle (11) by insertion, comprising:
a. a fastening projection (21) of the stud (20) with at least one locking means (23), the fastening projection being insertable into the receptacle (11);
b. a wall (16) with a second locking means (12), the wall being formed in one piece with the receptacle (11);
c. a cavity (15) arranged inside the receptacle (11), so that
d. the wall (16) is deflected into the cavity (15) during insertion of the fastening projection (21), until the first (23) and the second (12) locking means (16) engage each other, ***characterized in that***
e. the receptacle (11) and the fastening projection (21) have a corresponding shape which unambiguously defines the orientation of the stud (20).

2. Sole (1) according to claim 1, wherein the first locking means (23) is provided as a recess (23) in the fastening projection (21) and wherein the second locking means (12) is provided as a corresponding projection (12) of the wall (16), engaging the recess (23) during locking.

3. Sole (1) according to claim 1, wherein the first locking means (23) is provided as a projection in the fastening projection (21) and wherein the second locking means (12) is provided as a corresponding recess of the wall (16), which the projection engages during locking.

4. Sole (1) according to one of the claims 1 to 3, wherein the cavity (15) is provided as a recess open to the top side of the receptacle (11).

5. Sole (1) according to claim 4, wherein the cavity is closed to the top by an additional seal (60).

6. Sole (1) according to one of the claims 1 to 5, wherein the fastening projection (21) of the stud (20) has an oblong shape.

7. Sole (1) according to claim 6, wherein the wall (16) is substantially parallel to the longitudinal axis of the fastening projection (21).

8. Sole (1) according to claim 1, wherein a semi-circular cavity (15') and a corresponding wall (16') are arranged at at least one end of the receptacle 11.

9. Sole (1) according to claim 1, wherein a first and a second cavity (15) are provided on opposite sides of the receptacle (11) and wherein two walls (16) are extending substantially parallel to a longitudinal axis of the fastening projection (21).

10. Sole (1) according to claim 9, wherein two first locking means (23) are arranged on the two longitudinal sides of the fastening projections (21) and wherein two second locking means (12) are arranged on the corresponding walls (16).

11. Sole (1) according to one of the claims 1 to 10, wherein the stud (20) comprises an engagement means (22) to pull the stud (20) out of the receptacle (11).

12. Sole (1) according to claim 11, wherein the engagement means (22) is provided as two recesses (22) arranged on opposite sides of the stud (20).

13. Sole (1) according to one of the claims 1 to 12, wherein the lower part of the receptacle (11) directed to the stud (20) is reinforced by an additional insert (30).

14. Sole (1) according to claim 13, wherein the insert (30) is shaped like a collar and surrounds the fastening projection (21) of the mounted stud (20).

15. Sole (1) according to claim 14, wherein the collar-shaped insert (30) comprises cut-outs (31) corresponding to the first and second locking means (23, 12) of the stud (20) and the wall (16).

16. Sole (1) according to one of the preceding claims, wherein the receptacle (11) and/or the insert (30) are reinforced by a metal element.

17. Sole (1) according to claim 16, wherein the metal element is provided as a ring (40) surrounding the fastening projection (21) of the mounted stud (20).

18. Sole (1) according to one of the claims 1 to 17, wherein the second material of the receptacle (11) has a greater stiffness than the first material of the sole body (3).

19. Sole (1) according to one of the claims 1 to 18, wherein the sole can be produced by injection molding the first material of the sole body (3) around the pre-manufactured receptacle (11) made from a second material.

20. Shoe, in particular a soccer shoe, comprising a sole (1) according to one of the claims 1 to 19.

21. Method for the manufacture of a sole (1), in particular of a soccer shoe, comprising the following steps:
a. providing at least one receptacle (11) for a stud (20) with a fastening projection (21), wherein the fastening projection (21) comprises at least one locking means (23);
b. wherein the receptacle (11) comprises a cavity (15) and at least one wall (16) with a second locking means (12), the wall being formed in one piece with the receptacle; and
c. forming a sole body (3) around the at least one receptacle (11), wherein the receptacle (11) and the sole body (3) are made from two different materials, **the method being characterized in that**
e. the receptacle (11) is provided such that it has a corresponding shape to the fastening projection (21) to unambiguously define the orientation of the stud (20).

22. Method according to claim 21, wherein the receptacle (11) and/or the sole body (3) are manufactured by injection molding.

23. Method according to claim 22, wherein the cavity (15) of the receptacle (11) is sealed prior to step c. of claim 22.

24. Method according to claim 24, wherein the receptacle (11) and the sole body (3) are made from two different types of polyamide.

## Patentansprüche

1. Sohle (1), insbesondere für einen Fußballschuh, aufweisend einen Sohlenkörper (3) aus einem ersten Material, zumindest eine Aufnahme (11) aus einem zweiten Material und zumindest einen Stollen (20), der durch Einschieben in der Aufnahme (11) lösbar montiert werden kann, aufweisend:
a. einen Befestigungsvorsprung (21) des Stollens (20) mit zumindest einem Verriegelungsmittel (23), wobei der Befestigungsvorsprung in die Aufnahme (11) einschiebbar ist;
b. eine Wand (16) mit einem zweiten Verriegelungsmittel (12), wobei die Wand in einem Stück mit der Aufnahme (11) geformt ist;
c. eine Aussparung (15), die in der Aufnahme (11) angeordnet ist, so dass
d. die Wand (16) während des Einschiebens des Befestigungsvorsprungs (21) in die Aussparung (15) ausgelenkt ist, bis die ersten (23) und die zweiten (12) Verriegelungsmittel (16) sich ergreifen, **dadurch gekennzeichnet, dass**
e. die Aufnahme (11) und der Befestigungsvorsprung (21) eine sich entsprechende Form aufweisen, die eindeutig die Ausrichtung des Stollens (20) definieren.

2. Sohle (1) gemäß Anspruch 1, wobei das erste Verriegelungsmittel (23) als eine Vertiefung (23) in dem Befestigungsvorsprung (21) bereitgestellt wird und wobei das zweite Verriegelungsmittel (12) als ein entsprechender Vorsprung (12) der Wand (16) bereitgestellt wird, der die Vertiefung (23) während der Verriegelung ergreift.

3. Sohle (1) gemäß Anspruch 1, wobei das erste Verriegelungsmittel (23) als ein Vorsprung in dem Befestigungsvorsprung (21) bereitgestellt wird und wobei das zweite Verriegelungsmittel (12) als eine entsprechende Vertiefung der Wand (16) bereitgestellt wird, die der Vorsprung während der Verriegelung ergreift.

4. Sohle (1) gemäß einem der Ansprüche 1-3, wobei die Aussparung (15) als eine Vertiefung, die an der oberen Seite der Aufnahme (11) geöffnet ist, bereitgestellt wird.

5. Sohle (1) gemäß Anspruch 4, wobei die Aussparung durch eine zusätzliche Dichtung (60) oben geschlossen ist.

6. Sohle (1) gemäß einem der Ansprüche 1-5, wobei der Befestigungsvorsprung (21) des Stollens (20) eine längliche Form hat.

7. Sohle (1) gemäß Anspruch 6, wobei die Wand (16) im Wesentlichen parallel zu der Längsachse des Befestigungsvorsprungs (21) angeordnet ist.

8. Sohle (1) gemäß Anspruch 1, wobei eine halbkreisförmige Aussparung (15') und eine entsprechende Wand (16') zumindest an einem Ende der Aufnahme (11) angeordnet sind.

9. Sohle (1) gemäß Anspruch 1, wobei eine erste und eine zweite Aussparung (15) an gegenüberliegenden Seiten der Aufnahme (11) bereitgestellt sind, und wobei zwei Wände (16) sich im Wesentlichen parallel zu einer Längsachse des Befestigungsvorsprungs (21) erstrecken.

10. Sohle (1) gemäß Anspruch 9, wobei zwei erste Verriegelungsmittel (23) an den zwei Längsseiten der Befestigungsvorsprünge (21) angeordnet sind, und wobei zwei zweite Verriegelungsmittel (12) an den entsprechenden Wänden (16) angeordnet sind.

11. Sohle (1) gemäß einem der Ansprüche 1 - 10, wobei der Stollen (20) ein Eingriffsmittel (22) aufweist, um den Stollen (20) aus der Aufnahme (11) herauszuziehen.

12. Sohle (1) gemäß Anspruch 11, wobei das Eingriffsmittel (22) als zwei Vertiefungen (22), die auf gegenüberstehenden Seiten des Stollens (20) angeordnet sind, bereitgestellt ist.

13. Sohle (1) gemäß einem der Ansprüche 1 - 12, wobei der untere Teil der Aufnahme (11), der zum Stollen (20) gerichtet ist, durch einen zusätzlichen Einsatz (30) verstärkt ist.

14. Sohle (1) gemäß Anspruch 13, wobei der Einsatz (30) wie eine Manschette geformt ist und den Befestigungsvorsprung (21) des montierten Stollens (20) umgibt.

15. Sohle (1) gemäß Anspruch 14, wobei der manschettenförmige Einsatz (30) Aussparungen (31) aufweist, die den ersten und zweiten Verriegelungsmitteln (23, 12) des Stollens (20) und der Wand (16) entsprechen.

16. Sohle (1) gemäß einem der vorangehenden Ansprüche, wobei die Aufnahme (11) und/oder der Einsatz (30) durch ein Metallelement verstärkt sind.

17. Sohle (1) gemäß Anspruch 16, wobei das Metallelement als ein Ring (40) bereitgestellt ist, der den Befestigungsvorsprung (21) des montierten Stollens (20) umgibt.

18. Sohle (1) gemäß einem der Ansprüche 1-17, wobei das zweite Material der Aufnahme (11) eine größere Steifigkeit als das erste Material des Sohlenkörpers (3) aufweist.

19. Sohle (1) gemäß einem der Ansprüche 1 - 18, wobei die Sohle durch Spritzgießen des ersten Materials des Sohlenkörpers (3) um die vorher hergestellte Aufnahme (11), die aus einem zweiten Material hergestellt ist, hergestellt werden kann.

20. Schuh, insbesondere ein Fußballschuh, der eine Sohle (1) gemäß einem der Ansprüche 1-19 aufweist.

21. Verfahren für die Herstellung einer Sohle (1), insbesondere für einen Fußballschuh, die folgenden Schritte aufweisend:
a. Bereitstellen von zumindest einer Aufnahme (11) für einen Stollen (20) mit einem Befestigungsvorsprung (21), wobei der Befestigungsvorsprung (21) zumindest ein Verriegelungsmittel (23) aufweist;
b. wobei die Aufnahme (11) eine Aussparung (15) und zumindest eine Wand (16) mit einem zweiten Verriegelungsmittel (12) aufweist, wobei die Wand in einem Stück mit der Aufnahme geformt ist; und
c. Formen eines Sohlenkörpers (3) um die zumindest eine Aufnahme (11) herum, wobei die Aufnahme (11) und der Sohlenkörper (3) aus zwei verschiedenen Materialien hergestellt sind, wobei das Verfahren **dadurch gekennzeichnet ist, dass**
d. die Aufnahme (11) derart bereitgestellt ist, dass sie eine dem Befestigungsvorsprung (21) entsprechende Form aufweist, um die Ausrichtung des Stollens (20) eindeutig zu definieren.

22. Verfahren gemäß Anspruch 21, wobei die Aufnahme (11) und/oder der Sohlenkörper (3) durch Spritzgießen hergestellt werden.

23. Verfahren gemäß Anspruch 22, wobei die Aussparung (15) der Aufnahme (11) vor dem Schritt c. des Anspruchs 21 abgedichtet wird.

24. Verfahren gemäß Anspruch 21, wobei die Aufnahme (11) und der Sohlenkörper (3) aus zwei verschiedenen Arten von Polyamid hergestellt werden.

## Revendications

1. Semelle (1), notamment pour une chaussure de football, comprenant un corps de semelle (3) en une première matière, au moins un logement (11) en une seconde matière, et au moins un crampon (20) qui peut être monté par insertion, et de manière libérable, dans le logement (11), comprenant :
a. une protubérance de fixation (21) du crampon (20) comportant au moins un moyen de blocage (23), la protubérance de fixation pouvant être insérée dans le logement (11) ;
b. une paroi (16) présentant un second moyen de blocage (12), la paroi étant formée d'une seule pièce avec le logement (11) ;
c. une cavité (15) ménagée à l'intérieur du logement (11), afin que
d. la paroi (16) soit déviée vers l'intérieur de la cavité (15) pendant l'insertion de la protubérance de fixation (21), jusqu'à ce que le premier moyen de blocage (23) et le second moyen de blocage (12) viennent en prise mutuelle, **caractérisée en ce que**
e. le logement (11) et la protubérance de fixation (21) présentent une forme correspondante qui définit clairement l'orientation du crampon (20).

2. Semelle (1) selon la revendication 1, dans laquelle le premier moyen de blocage (23) est prévu sous la forme d'un évidement (23) dans la protubérance de fixation (21), et dans laquelle le second moyen de blocage (12) se présente sous la forme d'une protubérance (12) correspondante de la paroi (16), pénétrant dans l'évidement (23) pendant le blocage.

3. Semelle (1) selon la revendication 1, dans laquelle le premier moyen de blocage (23) est prévu sous la forme d'une protubérance dans la protubérance de fixation (21), et dans laquelle le second moyen de blocage (12) se présente sous la forme d'un évidement (12) correspondant de la paroi (16), dans lequel pénètre la protubérance pendant le blocage.

4. Semelle (1) selon l'une des revendications 1 à 3, dans laquelle la cavité (15) est prévue sous la forme d'un évidement ouvert vers le côté supérieur du logement (11).

5. Semelle (1) selon la revendication 4, dans laquelle la cavité est fermée vers le haut par un élément d'étanchéité (60) supplémentaire.

6. Semelle (1) selon l'une des revendications 1 à 5, dans laquelle la protubérance de fixation (21) du crampon (20) a une forme oblongue.

7. Semelle (1) selon la revendication 6, dans laquelle la paroi (16) est sensiblement parallèle à l'axe longitudinal de la protubérance de fixation (21).

8. Semelle (1) selon la revendication 1, dans laquelle une cavité semi-circulaire (15') et une paroi (16') correspondante sont disposées au niveau d'au moins une extrémité du logement (11).

9. Semelle (1) selon la revendication 1, dans laquelle une première et une seconde cavité (15) sont prévues sur des côtés opposés du logement (11), et dans laquelle deux parois (16) s'étendent sensiblement parallèlement à un axe longitudinal de la protubérance de fixation (21).

10. Semelle (1) selon la revendication 9, dans laquelle deux premiers moyens de blocage (23) sont disposés sur les deux côtés longitudinaux des protubérances de fixation (21), et dans laquelle deux seconds moyens de blocage (12) sont disposés sur les parois (16) correspondantes.

11. Semelle (1) selon l'une des revendications 1 à 10, dans laquelle le crampon (20) comprend un moyen de prise (22) pour extraire le crampon (20) du logement (11).

12. Semelle (1) selon la revendication 11, dans laquelle le moyen de prise (22) est prévu sous la forme de deux évidements (22) ménagés sur des côtés opposés du crampon (20).

13. Semelle (1) selon l'une des revendications 1 à 12, dans laquelle la partie inférieure du logement (11), dirigée vers le crampon (20), est renforcée par un élément rapporté (30) supplémentaire.

14. Semelle (1) selon la revendication 13, dans laquelle l'élément rapporté (30) a la forme d'un manchon et entoure la protubérance de fixation (21) du crampon (20) à l'état monté.

15. Semelle (1) selon la revendication 14, dans laquelle l'élément rapporté en forme de manchon (30) comprend des échancrures (31) correspondant aux premier et second moyens de blocage (23, 12) du crampon (20) et de la paroi (16).

16. Semelle (1) selon l'une des revendications précédentes, dans laquelle le logement (11) et/ou l'élément rapporté (30) sont renforcés par un élément métallique.

17. Semelle (1) selon la revendication 16, dans laquelle l'élément métallique est prévu sous la forme d'une bague (40) entourant la protubérance de fixation (21) du crampon (20) à l'état monté.

18. Semelle (1) selon l'une des revendications 1 à 17, dans laquelle la seconde matière constituant le logement (11) a une rigidité supérieure à celle de la première matière du corps de semelle (3).

19. Semelle (1) selon l'une des revendications 1 à 18, dans laquelle la semelle peut être fabriquée par moulage par injection de la première matière formant le corps de semelle (3) autour du logement (11) préalablement fabriqué à partir d'une seconde matière.

20. Chaussure, notamment chaussure de football, comprenant une semelle (1) selon l'une des revendications 1 à 19.

21. Procédé de fabrication d'une semelle (1), notamment pour une chaussure de football, comprenant les étapes consistant à :
a. prévoir au moins un logement (11) pour un crampon (20) comprenant une protubérance de fixation (21), la protubérance de fixation (21) comportant au moins un moyen de blocage (23) ;
b. dans lequel le logement (11) comprend une cavité (15) et au moins une paroi (16) présentant un second moyen de blocage (12), la paroi étant formée d'une seule pièce avec le logement ; et
c. former un corps de semelle (3) autour dudit au moins un logement (11), dans lequel le logement (11) et le corps de semelle (3) sont faits à partir de deux matières différentes, le procédé étant **caractérisé en ce que**
d. le logement (11) est prévu de manière à présenter une forme correspondante à celle de la protubérance de fixation (21) afin de définir clairement l'orientation du crampon (20).

22. Procédé selon la revendication 21, dans lequel le logement (11) et/ou le corps de semelle (3) sont fabriqués par moulage par injection.

23. Procédé selon la revendication 21, dans lequel la cavité (15) du logement (11) est hermétiquement fermée préalablement à l'étape c. selon la revendication 21.

24. Procédé selon la revendication 21, dans lequel le logement (11) et le corps de semelle (3) sont faits à partir de deux types différents de polyamide.
